# EUROPEAN PATENT APPLICATION

(11) **EP 4 819 223 A1**
(43) Date of publication of application: **07.10.2026**
(21) Application number: 25738916.3
(22) Date of filing: 07.01.2025
(51) Int. Cl.: H01M 4/136, H01M 4/134, H01M 4/58, H01M 4/525, H01M 4/36, H01M 10/052, H01M 4/02

(54) **POSITIVE ELECTRODE MATERIAL, POSITIVE ELECTRODE COMPRISING SAME AND LITHIUM SECONDARY BATTERY**

(30) Priority: 08.01.2024 KR 20240003005
(71) Applicant: LG Chem, Ltd., Seoul 07336 (KR)
(72) Inventor: CHOI, Jeong Bin, Daejeon 34122 (KR); LEE, Won Kyun, Daejeon 34122 (KR); LIM, Hyun Ju, Daejeon 34122 (KR); KWON, Oh Min, Daejeon 34122 (KR); TAK, Jang Yeul, Daejeon 34122 (KR); JUN, In Kook, Daejeon 34122 (KR)
(74) Representative: Hoffmann Eitle
(86) International application number: PCT/KR2025/000324
(87) International publication number: WO 2025/150842

(57) **Abstract**

The present invention relates to a positive electrode material, and to a positive electrode material including a first positive electrode active material with an olivine structure; and a second positive electrode active material that is a layer-structured lithium nickel-based oxide having a larger average particle diameter (D₅₀) than the first positive electrode active material, wherein the first positive electrode active material has an average particle diameter (D₅₀) of 0.5 µm to 10 µm, includes 2 wt% to 3.5 wt% of carbon (C), and has an average crystal size of 100 nm or more and less than 160 nm, and a positive electrode and a lithium secondary battery which include the same.

## Description

### TECHNICAL FIELD

### Cross-reference to Related Applications

This application claims priority from Korean Patent Application No. 10-2024-0003005, filed on January 8, 2024, the disclosure of which is incorporated by reference herein.

### Technical Field

The present invention relates to a positive electrode material, and a positive electrode and a lithium secondary battery which include the same, and particularly, to a positive electrode material which includes a positive electrode active material with an olivine structure and a positive electrode active material that is a layer-structured lithium nickel-based oxide, and a positive electrode and a lithium secondary battery which include the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

A lithium secondary battery is composed of four major components such as a positive electrode, a negative electrode, a separator, and an electrolyte. Among them, a positive electrode active material included in the positive electrode is a material that plays a major role in determining capacity, output, and lifetime of the battery. The positive electrode active material currently used includes a NCM-based positive electrode active material containing nickel, cobalt, manganese, and/or aluminum, or a LFP (lithium iron phosphate)-based positive electrode active material. An improvement in performance of the positive electrode active material is essential in order for the lithium secondary battery to have high energy density, output, and lifetime, and, as a result, a significant amount of research has been conducted recently to develop a high-performance positive electrode active material.

Recently, as the scope of use of the lithium secondary batteries has increased, development of a NCM-based positive electrode active material with an increased nickel content is being actively pursued to increase energy density of the batteries, particularly, to increase capacity. However, the NCM-based positive electrode active material with an increased nickel content has a problem in that thermal stability is reduced due to structural instability caused by the high nickel content. In contrast, the LFP-based positive electrode active material, which is a positive electrode active material with an olivine structure, has lower capacity than the NCM-based positive electrode active material, but it has an advantage of price competitiveness as well as excellent thermal stability. However, since a battery using 100% of the LFP-based positive electrode active material has a lower operating voltage than a battery using the NCM-based positive electrode active material, it has a disadvantage of low battery energy density. Accordingly, there have been attempts to bring out the advantage of each material by using a mixture of the NCM-based positive electrode active material and the LFP-based positive electrode active material. However, since the LFP-based positive electrode active material has problems with low electrical conductivity and low lithium ion diffusion rate, there has been a problem in that the LFP-based positive electrode active material acts as resistance when it is mixed with the NCM-based positive electrode active material.

Thus, there is a need to develop a positive electrode material which may prevent an increase in resistance of the electrode even if the mixture of the NCM-based positive electrode active material and the LFP-based positive electrode active material is used.

### DISCLOSURE OF THE INVENTION

### TECHNICAL PROBLEM

An aspect of the present invention provides a positive electrode material which may not only improve energy density of the positive electrode material, but may also prevent an increase in resistance of an electrode including the positive electrode material.

Another aspect of the present invention provides a positive electrode and a lithium secondary battery which include the above positive electrode material.

### TECHNICAL SOLUTION

In order to solve the above-described tasks, the present invention provides a positive electrode material, a positive electrode, and a lithium secondary battery.
(1) The present invention provides a positive electrode material including: a first positive electrode active material with an olivine structure; and a second positive electrode active material that is a layer-structured lithium nickel-based oxide having a larger average particle diameter (D₅₀) than the first positive electrode active material, wherein the first positive electrode active material has an average particle diameter (D₅₀) of 0.5 µm to 10 µm, includes 2 wt% to 3.5 wt% of carbon (C), and has an average crystal size of 100 nm or more and less than 160 nm.
(2) The present invention provides the positive electrode material of (1) above, wherein the first positive electrode active material includes a lithium iron phosphate-based compound and a carbon (C)-containing coating layer formed on the lithium iron phosphate-based compound.
(3) The present invention provides the positive electrode material of (2) above, wherein the lithium iron phosphate-based compound has a composition represented by Formula 1.

   [Formula 1] Li₁₊ₓFe₁₋ₐMₐPO₄

   In Formula 1,
   M is at least one selected from Al, Mg, Ni, Co, Mn, Ti, Ga, Cu), V, Nb, Zr, Ce, In, Zn, Na, Si, Ca, B, and Y, and
   -0.2≤x≤0.2, and 0≤a≤0.9.
(4) The present invention provides the positive electrode material of any one of (1) to (3) above, wherein a particle form of the first positive electrode active material is a form of a secondary particle, a form of a single particle, or a combination thereof.
(5) The present invention provides the positive electrode material of any one of (1) to (4) above, wherein the second positive electrode active material includes nickel in an amount of 60 mol% or more based on a total number of moles of metals excluding lithium.
(6) The present invention provides the positive electrode material of any one of (1) to (5) above, wherein the second positive electrode active material has a composition represented by Formula 2.

   [Formula 2] Li_{1+y}Ni_{b}Co_{c}M1_{d}M2ₑO₂

   In Formula 2,
   M1 is Mn, Al, or a combination thereof,
   M2 is at least one selected from W, Mo, Cr, Zr, Ti, Mg, Ta, B and Nb, and
   -0.05≤y≤0.3, 0.6≤b<1.0, 0<c<0.4, 0<d<0.4, 0≤e≤0.1, and b+c+d+e=1.
(7) The present invention provides the positive electrode material of any one of (1) to (6) above, wherein the second positive electrode active material is in a form of a secondary particle.
(8) The present invention provides the positive electrode material of any one of (1) to (7) above, wherein the second positive electrode active material has an average particle diameter (D₅₀) of 3 µm to 15 µm.
(9) The present invention provides the positive electrode material of any one of (1) to (8) above, wherein the first positive electrode active material is included in an amount of 35 wt% or more and less than 90 wt% based on a total weight of the first positive electrode active material and the second positive electrode active material.
(10) The present invention provides a positive electrode including the positive electrode material of any one of (1) to (9) above.
(11) The present invention provides a lithium secondary battery including the positive electrode of (10) above.

### ADVANTAGEOUS EFFECTS

Since a positive electrode material according to the present invention simultaneously includes a small particle-sized first positive electrode active material with an olivine structure having an average particle diameter (D₅₀) of 0.5 µm to 10 µm, including 2 wt% to 3.5 wt% of carbon (C), and having an average crystal size of 100 nm or more and less than 160 nm; and a large particle-sized second positive electrode active material that is a lithium nickel-based oxide, it not only has excellent energy density, but may also improve performance of an electrode and a battery which include the positive electrode material, for example, resistance performance or life performance.

### BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, a positive electrode active material in a form of a single particle is a concept in contrast to a positive electrode active material in a form of a spherical secondary particle that is formed by aggregation of tens to hundreds of primary particles, wherein it means a positive electrode active material composed of 10 or less primary particles. Specifically, in this specification, the positive electrode active material in the form of a single particle may be a single particle composed of one primary particle, or may be in a form of a secondary particle in which several primary particles are aggregated. In this case, the 'primary particle' means a smallest unit of particle which is recognized when observing the positive electrode active material through a scanning electron microscope, and the 'secondary particle' means a secondary structure formed by aggregating a plurality of primary particles.

In this specification, an average particle diameter (D₅₀) may be defined as a particle diameter corresponding to 50% of volume accumulation in a particle diameter distribution curve of particles. The average particle diameter (D₅₀), for example, may be measured by using a laser diffraction method, and more specifically, after dispersing the positive electrode active material in a dispersion medium, the dispersion medium is introduced into a commercial laser diffraction particle size measurement instrument (e.g., Mastersizer3000 by Malvern Panalytical Ltd.), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

In this specification, an 'average crystal size' may be quantitatively obtained using X-ray diffraction (XRD) analysis by copper (Cu) Kα X-rays. Specifically, after XRD data of the positive electrode active material are obtained by using Bruker's D8 XRD equipment (Cu-target, voltage: 45 kV, current: 40 mA, 2θ: 10° to 100°), the average crystal size may be obtained through a Rietveld refinement method using a software called Highscore by Malvern Panalytical Ltd. In this case, the Rietveld refinement method is a method in which a diffraction pattern is calculated from initial structural models that crystal structures of materials may have, and is compared with a diffraction pattern measured from an actual synthetic material, and various structural factors are introduced and gradually and repeatedly adjusted by changing their values until the two patterns match. Among the structural factors that may be introduced in this process, a crystal size may be obtained by using a full width at half maximum (FWHM) of a peak for each crystal plane appearing in the measured diffraction pattern.

### Positive Electrode Material

A positive electrode material according to the present invention includes a first positive electrode active material with an olivine structure; and a second positive electrode active material that is a layer-structured lithium nickel-based oxide having a larger average particle diameter (D₅₀) than the first positive electrode active material. In this case, the first positive electrode active material has an average particle diameter (D₅₀) of 0.5 µm to 10 µm, includes 2 wt% to 3.5 wt% of carbon (C), and has an average crystal size of 100 nm or more and less than 160 nm.

The present inventors have found that, in a case in which a positive electrode material simultaneously includes a small particle-sized first positive electrode active material with an olivine structure having an average particle diameter (D₅₀) of 0.5 µm to 10 µm, including 2 wt% to 3.5 wt% of carbon (C), and having an average crystal size of 100 nm or more and less than 160 nm; and a large particle-sized second positive electrode active material that is a lithium nickel-based oxide, when the positive electrode material is used in a positive electrode for a secondary battery and a secondary battery, resistance of the positive electrode and the battery may be reduced, and life performance may be improved, thereby leading to the completion of the present invention.

Particularly, in the case that the first positive electrode active material has an average particle diameter (D₅₀) of 0.5 µm to 10 µm, includes 2 wt% to 3.5 wt% of carbon (C), and has an average crystal size of 100 nm or more and less than 160 nm, since an appropriate movement path of lithium ions in a crystal is provided, it has been confirmed that the resistance of the positive electrode and the battery, in which the positive electrode material according to the present invention is used, is reduced and the life performance is improved.

As described in the background art of the invention, there is a great demand for increased capacity and energy density as the scope of use of lithium secondary batteries has increased recently, but in a case in which only the first positive electrode active material is used as a positive electrode material, there is a problem of low energy density, and in a case in which only the second positive electrode active material is used as a positive electrode material, there is a problem of reduced thermal stability.

Since the positive electrode material includes the first positive electrode active material with the olivine structure; and the second positive electrode active material that is the layer-structured lithium nickel-based oxide having a larger average particle diameter (D₅₀) than the first positive electrode active material, the first positive electrode active material is filled between the second positive electrode active materials, and thus, electrode density is high and stress applied to the second positive electrode active material is distributed so that particle cracking may be prevented during rolling for electrode preparation.

The first positive electrode active material may be prepared through a process of drying a mixture, in which a lithium raw material (e.g. Li₂CO₃, LiOH, etc.), a transition metal raw material (e.g. FePO₄), or a carbon raw material (e.g. sucrose) are wet-mixed, by spray drying, and then sintering the dried powder. However, the present invention is not limited thereto.

The second positive electrode active material may be obtained by preparing a precursor through co-precipitation in the same conventional manner, then mixing the precursor with a lithium raw material, and sintering the mixture, but the present invention is not limited thereto.

According to the present invention, the first positive electrode active material has an average particle diameter (D₅₀) of 0.5 µm to 10 µm. Specifically, in a case in which the first positive electrode active material is in a form of a secondary particle that is formed by aggregation of primary particles, the average particle diameter (D₅₀) may be 0.5 µm or more, 1.0 µm or more, 1.5 µm or more, 2.0 µm or more, 2.5 µm or more, 3.0 µm or more, 3.5 µm or more, 4.0 µm or more, 4.5 µm or more, or 5.0 µm or more, and may be 6.5 µm or less, 7.0 µm or less, 7.5 µm or less, 8.0 µm or less, 8.5 µm or less, 9.0 µm or less, 9.5 µm or less, or 10 µm or less. In addition, in a case in which the first positive electrode active material is in a form of a single particle, the average particle diameter (D₅₀) may be 0.5 µm or more, 0.6 µm or more, 0.7 µm or more, 0.8 µm or more, 0.9 µm or more, 1.0 µm or more, 1.1 µm or more, 1.2 µm or more, 1.3 µm or more, 1.4 µm or more, or 1.5 µm or more, and may be 2.0 µm or less, 2.5 µm or less, 3.0 µm or less, 3.5 µm or less, 4.0 µm or less, 4.5 µm or less, 5.0 µm or less, 5.5 µm or less, 6.0 µm or less, 6.5 µm or less, 7.0 µm or less, 7.5 µm or less, 8.0 µm or less, 8.5 µm or less, 9.0 µm or less, 9.5 µm or less, or 10 µm or less. In a case in which the average particle diameter (D₅₀) of the first positive electrode active material is within the above range, the electrode density may be improved. In a case in which the average particle diameter (D₅₀) of the first positive electrode active material is less than 0.5 µm, it is difficult to handle the powder due to the excessively small particles, and there is a problem of poor electrode processability, and, in a case in which the average particle diameter (D₅₀) is greater than 10 µm, there is a problem in that the electrode density is not improved.

According to the present invention, the first positive electrode active material includes 2 wt% to 3.5 wt% of carbon (C). Specifically, the first positive electrode active material may include carbon (C) in an amount of 2 wt% or more, 2.1 wt% or more, or 2.2 wt% or more, and 3.2 wt% or less, 3.3 wt% or less, 3.4 wt% or less, or 3.5 wt% or less. In a case in which the carbon (C) is included in the first positive electrode active material in the above-described amount range, the positive electrode active material may have appropriate electronic conductivity due to a carbon layer present on a surface thereof. In a case in which the amount of the carbon (C) included in the first positive electrode active material is less than 2 wt%, there is a problem in that the positive electrode active material does not have appropriate electronic conductivity, and, in a case in which the amount of the carbon (C) is greater than 3.5 wt%, there is a problem in that reactivity of the positive electrode active material is reduced due to the excessive amount of the carbon.

According to the present invention, the first positive electrode active material has an average crystal size of 100 nm or more and less than 160 nm. Specifically, the average crystal size of the first positive electrode active material may be 100 nm or more, 101 nm or more, 102 nm or more, 103 nm or more, 104 nm or more, 105 nm or more, 106 nm or more, 107 nm or more, 108 nm or more, 109 nm or more, 110 nm or more, 111 nm or more, 112 nm or more, 113 nm or more, 114 nm or more, or 115 nm or more, and may be 151 nm or less, 152 nm or less, 153 nm or less, 154 nm or less, 155 nm or less, 156 nm or less, 157 nm or less, 158 nm or less, 159 nm or less, or less than 160 nm. In a case in which the average crystal size of the first positive electrode active material is within the above range, there is an advantage in that the resistance of the electrode is reduced.

In a case in which the average crystal size of the first positive electrode active material is less than 100 nm, there is a problem in that the crystal size is excessively small and performance of the battery is degraded due to deterioration, and, in a case in which the average crystal size is 160 nm or more, there is a problem in that the movement path of the lithium ions in the crystal is increased to degrade the performance of the battery.

According to the present invention, the first positive electrode active material may include a lithium iron phosphate-based compound and a carbon (C)-containing coating layer formed on the lithium iron phosphate-based compound in terms of improving the electronic conductivity. That is, the first positive electrode active material may be a lithium iron phosphate-based compound on which a carbon (C)-containing coating layer is formed. Specifically, the first positive electrode active material may be a lithium iron phosphate-based compound in which a carbon coating layer is formed on a surface of a particle (particle recognized through a scanning electron microscope (SEM) image).

According to the present invention, the lithium iron phosphate-based compound may have a composition represented by Formula 1.

[Formula 1] Li₁₊ₓFe₁₋ₐMₐPO₄

In Formula 1,
M is at least one selected from aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), sodium (Na), silicon (Si), calcium (Ca), boron (B), and yttrium (Y), and
-0.2≤x≤0.2, and 0≤a≤0.9.
M is a doping element, wherein M may specifically be at least one selected from Al, Mg, Ni, Co, Mn, Ti, Ga, Cu, V, Nb, Zr, Ce, In, Zn, and Y. M is not essentially included, but when M is included in an appropriate amount, it may improve stability of a crystal structure and may help improve performance of the positive electrode material.
x may be -0.2 or more, -0.1 or more, or 0 or more, and may be 0.1 or less or 0.2 or less. When x satisfies the above range, structural stability may be improved.
a may be 0 or more, 0.1 or more, or 0.2 or more, and may be 0.3 or less, 0.4 or less, 0.5 or less, 0.6 or less, 0.7 or less, 0.8 or less, or 0.9 or less. When a satisfies the above range, high energy density is exhibited so that high capacity characteristics may be achieved.

According to the present invention, a particle form of the first positive electrode active material is a form of a secondary particle, a form of a single particle, or a combination thereof. That is, the first positive electrode active material may exist only in the form of a secondary particle that is formed by aggregation of tens to hundreds of primary particles, or in the form of a single particle composed of 10 or less primary particles, and may also exist in a state in which the form of a secondary particle and the form of a single particle are mixed. In a case in which the first positive electrode active material exists only in the form of a secondary particle, since an interface is less exposed, resistance characteristics may be further improved.

According to the present invention, the second positive electrode active material, which is the layer-structured lithium nickel-based oxide, may include nickel in an amount of 60 mol% or more based on a total number of moles of metals excluding lithium in terms of improving capacity of the battery.

Specifically, the first positive electrode active material may have a composition represented by Formula 2.

[Formula 2] Li_{1+y}Ni_{b}Co_{c}M1_{d}M2ₑO₂

In Formula 2,
M1 is Mn, Al, or a combination thereof,
M2 is at least one selected from tungsten (W), molybdenum (Mo), chromium (Cr), Zr, Ti, Mg, tantalum (Ta), B and Nb, and
-0.05≤y≤0.3, 0.6≤b<1.0, 0<c<0.4, 0<d<0.4, 0≤e≤0.1, and b+c+d+e=1.
y may specifically be -0.05 or more, -0.04 or more, - 0.03 or more, -0.02 or more, -0.01 or more, or 0 or more, and may be 0.01 or less, 0.02 or less, 0.03 or less, 0.04 or less, 0.05 or less, 0.06 or less, 0.07 or less, 0.08 or less, 0.09 or less, 0.10 or less, 0.20 or less, or 0.30 or less.
a refers to an atomic fraction of nickel among metallic elements excluding lithium in the second positive electrode active material, wherein it may specifically be 0.6 or more, 0.7 or more, 0.8 or more, or 0.85 or more, and may be 0.90 or less, 0.95 or less, or less than 1.0.
b refers to an atomic fraction of cobalt among the metallic elements excluding lithium in the second positive electrode active material, wherein it may specifically be greater than 0, 0.01 or more, 0.02 or more, 0.03 or more, 0.04 or more, or 0.05 or more, and may be 0.10 or less, 0.20 or less, 0.30 or less, or less than 0.4.
c refers to an atomic fraction of element M1 among the metallic elements excluding lithium in the second positive electrode active material, wherein it may specifically be greater than 0, 0.01 or more, 0.02 or more, 0.03 or more, 0.04 or more, or 0.05 or more, and may be 0.10 or less, 0.20 or less, 0.30 or less, or less than 0.4.
d refers to an atomic fraction of element M2 among the metallic elements excluding lithium in the second positive electrode active material, wherein it may specifically be 0 or more or 0.01 or more, and may be 0.05 or less, 0.06 or less, 0.07 or less, 0.08 or less, 0.09 or less, or 0.1 or less.

According to the present invention, the second positive electrode active material may be in a form of a secondary particle. That is, the second positive electrode active material may be in the form of a secondary particle that is formed by aggregation of tens to hundreds of primary particles.

According to the present invention, the second positive electrode active material may have an average particle diameter (D₅₀) of 3 µm to 15 µm. Specifically, the average particle diameter (D₅₀) of the second positive electrode active material may be 3.0 µm or more, 4.0 µm or more, 5.0 µm or more, 6.0 µm or more, 7.0 µm or more, 8.0 µm or more, or 9.0 µm or more, and may be 10.0 µm or less, 11.0 µm or less, 12.0 µm or less, 13.0 µm or less, 14.0 µm or less, or 15.0 µm or less. In a case in which the average particle diameter (D₅₀) of the second positive electrode active material is within the above range, an effect of improving electrode density may be maximized when the second positive electrode active material is mixed with the first positive electrode active material.

Also, in a case in which the average particle diameters (D₅₀) of the first positive electrode active material and the second positive electrode active material are within the above ranges, since the second positive electrode active material may be appropriately distributed between the first positive electrode active materials, a packing ratio may be excellent.

According to the present invention, the first positive electrode active material may be included in an amount of 35 wt% or more and less than 90 wt% based on a total weight of the first positive electrode active material and the second positive electrode active material. Specifically, the first positive electrode active material may be included in an amount of 35 wt% or more or 40 wt% or more, and 55 wt% or less, 60 wt% or less, 65 wt% or less, 70 wt% or less, 75 wt% or less, 80 wt% or less, 85 wt% or less, or less than 90 wt% based on the total weight of the first positive electrode active material and the second positive electrode active material. In a case in which the first positive electrode active material is included in the above-described amount range, there is an advantage in that characteristics attributed to the structural stability of the first positive electrode active material may be utilized.

### Positive Electrode

The present invention provides a positive electrode including the above positive electrode material.

The positive electrode may include a positive electrode collector, and a positive electrode active material layer formed on the positive electrode collector, wherein the positive electrode active material layer may include the positive electrode material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode material, if necessary. In this case, the positive electrode material may be included in an amount of 80 wt% to 99 wt%, more specifically, 85 wt% to 98.5 wt% based on a total weight of the positive electrode active material layer, and excellent capacity characteristics may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), Na, or Ca, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode material is used. Specifically, a composition for forming a positive electrode active material layer (positive electrode slurry), which is prepared by dissolving or dispersing the above-described positive electrode material as well as optionally the binder, the conductive agent, and a dispersant in a solvent, is applied to the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode.

The lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode may be prepared by coating a composition for forming a negative electrode active material layer (negative electrode slurry), which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode material according to the present invention stably exhibits excellent resistance characteristics and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Examples

### Preparation Example 1

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 12 wt% based on a total weight of a solid content present in the mixed solution, and the mixed solution was wet-milled with a bead mill to obtain a slurry. In this case, an average particle diameter (D₅₀) of entire raw materials (Lᵢ₂CO₃, FePO₄, sucrose) present in the slurry was 200 nm.

After the slurry was dried through spray drying (inlet temperature: 230°C, outlet temperature: 95°C), powder after completion of the drying was heat-treated at 750°C for 6.5 hours in a nitrogen atmosphere to prepare a LiFePO₄ positive electrode active material (average particle diameter (D₅₀): 5.7 µm) having a carbon-containing coating layer formed thereon. In this case, the positive electrode active material was in a form of a secondary particle.

### Preparation Example 2

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 12 wt% based on a total weight of a solid content present in the mixed solution, and the mixed solution was wet-milled with a bead mill to obtain a slurry. In this case, an average particle diameter (D₅₀) of entire raw materials (Lᵢ₂CO₃, FePO₄, sucrose) present in the slurry was 200 nm.

After the slurry was dried through spray drying (inlet temperature: 230°C, outlet temperature: 95°C), powder after completion of the drying was heat-treated at 700°C for 10 hours in a nitrogen atmosphere to prepare a LiFePO₄ positive electrode active material (average particle diameter (D₅₀): 5.5 µm) having a carbon-containing coating layer formed thereon. In this case, the positive electrode active material was in a form of a secondary particle.

### Preparation Example 3

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 10 wt% based on a total weight of a solid content present in the mixed solution, and the mixed solution was wet-milled with a bead mill to obtain a slurry. In this case, an average particle diameter (D₅₀) of entire raw materials (Lᵢ₂CO₃, FePO₄, sucrose) present in the slurry was 200 nm.

After the slurry was dried through spray drying (inlet temperature: 230°C, outlet temperature: 95°C), powder after completion of the drying was heat-treated at 700°C for 10 hours in a nitrogen atmosphere to prepare a LiFePO₄ positive electrode active material (average particle diameter (D₅₀): 6.3 µm) having a carbon-containing coating layer formed thereon. In this case, the positive electrode active material was in a form of a secondary particle.

### Preparation Example 4

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 8 wt% based on a total weight of a solid content present in the mixed solution, and the mixed solution was wet-milled with a bead mill to obtain a slurry. In this case, an average particle diameter (D₅₀) of entire raw materials (Lᵢ₂CO₃, FePO₄, sucrose) present in the slurry was 200 nm.

After the slurry was dried through spray drying (inlet temperature: 230°C, outlet temperature: 95°C), powder after completion of the drying was heat-treated at 700°C for 10 hours in a nitrogen atmosphere to prepare a LiFePO₄ positive electrode active material (average particle diameter (D₅₀): 6.1 µm) having a carbon-containing coating layer formed thereon. In this case, the positive electrode active material was in a form of a secondary particle.

### Preparation Example 5

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 15 wt% based on a total weight of a solid content present in the mixed solution, and the mixed solution was wet-milled with a bead mill to obtain a slurry.

After the slurry was dried through spray drying (inlet temperature: 230°C, outlet temperature: 95°C), powder after completion of the drying was heat-treated at 700°C for 10 hours in a nitrogen atmosphere to prepare a LiFePO₄ positive electrode active material (average particle diameter (D₅₀): 5.5 µm) having a carbon-containing coating layer formed thereon. In this case, the positive electrode active material was in a form of a secondary particle.

### Preparation Example 6

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 16.5 wt% based on a total weight of a solid content present in the mixed solution, and the mixed solution was wet-milled with a bead mill to obtain a slurry.

After the slurry was dried through spray drying (inlet temperature: 230°C, outlet temperature: 95°C), powder after completion of the drying was heat-treated at 700°C for 10 hours in a nitrogen atmosphere to prepare a LiFePO₄ positive electrode active material (average particle diameter (D₅₀): 5.7 µm) having a carbon-containing coating layer formed thereon. In this case, the positive electrode active material was in a form of a secondary particle.

### Preparation Example 7

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 12 wt% based on a total weight of a solid content present in the mixed solution, and the mixed solution was wet-milled with a bead mill to obtain a slurry.

After the slurry was dried through spray drying (inlet temperature: 230°C, outlet temperature: 95°C), powder after completion of the drying was heat-treated at 700°C for 6.5 hours in a nitrogen atmosphere to prepare a LiFePO₄ positive electrode active material (average particle diameter (D₅₀): 5.5 µm) having a carbon-containing coating layer formed thereon. In this case, the positive electrode active material was in a form of a secondary particle.

### Preparation Example 8

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 9 wt% based on a total weight of a solid content present in the mixed solution, and the mixed solution was wet-milled with a bead mill to obtain a slurry.

After the slurry was dried through spray drying (inlet temperature: 230°C, outlet temperature: 95°C), powder after completion of the drying was heat-treated at 750°C for 10 hours in a nitrogen atmosphere to prepare a LiFePO₄ positive electrode active material (average particle diameter (D₅₀): 6.2 µm) having a carbon-containing coating layer formed thereon. In this case, the positive electrode active material was in a form of a secondary particle.

### Preparation Example 9

A LiFePO₄ positive electrode active material (average particle diameter (D₅₀): 1.9 µm) having a carbon-containing coating layer formed thereon was prepared by grinding the positive electrode active material in the form of a secondary particle (average particle diameter (D₅₀): 6.1 µm), which had been prepared in Preparation Example 1, using a jet mill to have an average particle diameter (D₅₀) of 1.9 µm. In this case, the finally prepared positive electrode active material was in a form of a single particle.

### Preparation Example 10

A LiFePO₄ positive electrode active material (average particle diameter (D₅₀): 1.0 µm) having a carbon-containing coating layer formed thereon was prepared by grinding the positive electrode active material in the form of a secondary particle (average particle diameter (D₅₀): 5.5 µm), which had been prepared in Preparation Example 4, using a jet mill to have an average particle diameter (D₅₀) of 1.0 µm. In this case, the finally prepared positive electrode active material was in a form of a single particle.

### Preparation Example 11

After Li₂CO₃ and FePO₄ were mixed with water in amounts such that a molar ratio (Li:Fe) of lithium:iron was 1.05:1 (mixed such that a total amount of the Li₂CO₃ and FePO₄ was 40 wt% of a solution), a mixed solution was prepared by additionally adding sucrose in an amount of 8 wt% based on a total weight of a solid content present in the mixed solution, and the mixed solution was wet-milled with a bead mill to obtain a slurry.

After the slurry was dried through spray drying (inlet temperature: 230°C, outlet temperature: 95°C), powder after completion of the drying was heat-treated at 750°C for 10 hours in a nitrogen atmosphere to prepare a LiFePO₄ positive electrode active material (average particle diameter (D₅₀): 6.2 µm) having a carbon-containing coating layer formed thereon. A LiFePO₄ positive electrode active material (average particle diameter (D₅₀): 1.2 µm) was prepared by grinding the positive electrode active material having a carbon-containing coating layer formed thereon (average particle diameter (D₅₀): 6.2 µm)(in the form of a secondary particle) using a jet mill to have an average particle diameter (D₅₀) of 1.2 µm. In this case, the finally prepared positive electrode active material was in a form of a single particle.

### Preparation Example 12

A LiFePO₄ positive electrode active material (average particle diameter (D₅₀): 1.1 µm) having a carbon-containing coating layer formed thereon was prepared by grinding the positive electrode active material in the form of a secondary particle (average particle diameter (D₅₀): 5.5 µm), which had been prepared in Preparation Example 7, to have an average particle diameter (D₅₀) of 1.1 µm. In this case, the finally prepared positive electrode active material was in a form of a single particle.

### Examples and Comparative Examples

### Example 1

A positive electrode material was prepared by mixing the LiFePO₄ positive electrode active material having a carbon-containing coating layer formed thereon, which had been prepared in Preparation Example 1, and a LiNi_{0.86}Co_{0.05}Mn_{0.07}Al_{0.02}O₂ positive electrode active material (average particle diameter (D₅₀): 10 µm) in a form of a secondary particle at a weight ratio of 4:6.

### Example 2

A positive electrode material was prepared by mixing the LiFePO₄ positive electrode active material having a carbon-containing coating layer formed thereon, which had been prepared in Preparation Example 2, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Example 3

A positive electrode material was prepared by mixing the LiFePO₄ positive electrode active material having a carbon-containing coating layer formed thereon, which had been prepared in Preparation Example 3, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Example 4

A positive electrode material was prepared by mixing the LiFePO₄ positive electrode active material having a carbon-containing coating layer formed thereon, which had been prepared in Preparation Example 5, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Example 5

A positive electrode material was prepared by mixing the LiFePO₄ positive electrode active material having a carbon-containing coating layer formed thereon, which had been prepared in Preparation Example 9, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Example 6

A positive electrode material was prepared by mixing the LiFePO₄ positive electrode active material having a carbon-containing coating layer formed thereon, which had been prepared in Preparation Example 9, and a LiNi_{0.86}Co_{0.05}Mn_{0.07}Al_{0.02}O₂ positive electrode active material (average particle diameter (D₅₀): 10 µm) in the form of a secondary particle at a weight ratio of 5:5.

### Example 7

A positive electrode material was prepared by mixing the LiFePO₄ positive electrode active material having a carbon-containing coating layer formed thereon, which had been prepared in Preparation Example 9, and a LiNi_{0.86}Co_{0.05}Mn_{0.07}Al_{0.02}O₂ positive electrode active material (average particle diameter (D₅₀): 10 µm) in the form of a secondary particle at a weight ratio of 6:4.

### Example 8

A positive electrode material was prepared by mixing the LiFePO₄ positive electrode active material having a carbon-containing coating layer formed thereon, which had been prepared in Preparation Example 9, and a LiNi_{0.86}Co_{0.05}Mn_{0.07}Al_{0.02}O₂ positive electrode active material (average particle diameter (D₅₀): 10 µm) in the form of a secondary particle at a weight ratio of 7:3.

### Example 9

A positive electrode material was prepared by mixing the LiFePO₄ positive electrode active material having a carbon-containing coating layer formed thereon, which had been prepared in Preparation Example 9, and a LiNi_{0.86}Co_{0.05}Mn_{0.07}Al_{0.02}O₂ positive electrode active material (average particle diameter (D₅₀): 10 µm) in the form of a secondary particle at a weight ratio of 8:2.

### Example 10

A positive electrode material was prepared by mixing the LiFePO₄ positive electrode active material having a carbon-containing coating layer formed thereon, which had been prepared in Preparation Example 1, and a LiNi_{0.86}Co_{0.05}Mn_{0.07}Al_{0.02}O₂ positive electrode active material (average particle diameter (D₅₀): 10 µm) in the form of a secondary particle at a weight ratio of 9:1.

### Comparative Example 1

A positive electrode material was prepared by mixing the LiFePO₄ positive electrode active material having a carbon-containing coating layer formed thereon, which had been prepared in Preparation Example 4, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 2

A positive electrode material was prepared by mixing the LiFePO₄ positive electrode active material having a carbon-containing coating layer formed thereon, which had been prepared in Preparation Example 6, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 3

A positive electrode material was prepared by mixing the LiFePO₄ positive electrode active material having a carbon-containing coating layer formed thereon, which had been prepared in Preparation Example 7, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 4

A positive electrode material was prepared by mixing the LiFePO₄ positive electrode active material having a carbon-containing coating layer formed thereon, which had been prepared in Preparation Example 8, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 5

A positive electrode material was prepared by mixing the LiFePO₄ positive electrode active material having a carbon-containing coating layer formed thereon, which had been prepared in Preparation Example 10, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 6

A positive electrode material was prepared by mixing the LiFePO₄ positive electrode active material having a carbon-containing coating layer formed thereon, which had been prepared in Preparation Example 11, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Comparative Example 7

A positive electrode material was prepared by mixing the LiFePO₄ positive electrode active material having a carbon-containing coating layer formed thereon, which had been prepared in Preparation Example 12, and a LiNi_{0.86}Co_{0.05}Mn_{0.07}Al_{0.02}O₂ positive electrode active material (average particle diameter (D₅₀): 10 µm) in the form of a secondary particle at a weight ratio of 4:6.

### Experimental Examples

### Experimental Example 1: Confirmation of Amount of Carbon (C) Present in the First Positive Electrode Active Material

An amount of carbon present in each of the LiFePO₄ positive electrode active materials having a carbon-containing coating layer formed thereon, which were used in Examples 1 to 10 and Comparative Examples 1 to 7, was measured using a carbon and sulfur analyzer (LECO Corporation, CS844), and the results thereof are presented in Table 1 below.

### Experimental Example 2: Confirmation of Average Crystal Size of the First Positive Electrode Active Material

XRD diffraction data of each of the LiFePO₄ positive electrode active materials having a carbon-containing coating layer formed thereon, which were used in Examples 1 to 10 and Comparative Examples 1 to 7, were obtained using an XRD (Bruker Corporation, D8 ENDEAVOR), an average crystal size was derived using the Rietveld refinement method, and the results thereof are presented in Table 1 below.

**[Table 1]**

| Category | Carbon content (wt%) | Average crystal size of the first positive electrode active material (nm) | Amount of the first positive electrode active material relative to total weight of the positive electrode active material (wt%) |
|---|---|---|---|
| Example 1 | 2.6 | 150.9 | 40 |
| Example 2 | 2.6 | 135.9 | 40 |
| Example 3 | 2.2 | 115.1 | 40 |
| Example 4 | 3.2 | 102.0 | 40 |
| Example 5 | 2.6 | 150.9 | 40 |
| Example 6 | 2.6 | 150.9 | 50 |
| Example 7 | 2.6 | 150.9 | 60 |
| Example 8 | 2.6 | 150.9 | 70 |
| Example 9 | 2.6 | 150.9 | 80 |
| Example 10 | 2.6 | 150.9 | 90 |
| Comparative Example 1 | 1.4 | 170.7 | 40 |
| Comparative Example 2 | 3.9 | 90.6 | 40 |
| Comparative Example 3 | 2.6 | 98.1 | 40 |
| Comparative Example 4 | 2.0 | 164.2 | 40 |
| Comparative Example 5 | 1.4 | 170.7 | 40 |
| Comparative Example 6 | 1.4 | 174.1 | 40 |
| Comparative Example 7 | 2.6 | 98.1 | 40 |

Referring to Table 1, it may be confirmed that the positive electrode materials of Examples 1 to 10 simultaneously included the small particle-sized first positive electrode active material with an olivine structure including 2 wt% to 3.5 wt% of carbon (C) and the large particle-sized second positive electrode active material that was a lithium nickel-based oxide, wherein the average crystal size of the first positive electrode active material satisfied a range of 100 nm or more and less than 160 nm, but the positive electrode materials of Comparative Examples 1 to 7 did not satisfy the above range.

### Experimental Example 3: Battery Resistance Evaluation

Each of the positive electrode materials of Examples 1 to 5 and Comparative Examples 1 to 7, carbon black as a conductive agent, and polyvinylidene fluoride (PVDF), as a binder, were mixed in a weight ratio of 96:2:2 in an N-methylpyrrolidone (NMP) solvent to prepare a positive electrode slurry. One surface of an aluminum current collector was coated with the above-prepared positive electrode slurry, dried at 130°C, and then rolled to prepare a positive electrode.

A lithium metal electrode was used as a negative electrode, and an electrode assembly was prepared by disposing a porous polyethylene separator between the positive electrode and the negative electrode. The electrode assembly was disposed in a battery case and an electrolyte solution, in which 1.0 M LiPF₆ was dissolved in an organic solvent in which ethylene carbonate(EC):ethyl methyl carbonate(EMC):diethyl carbonate(DEC) were mixed in a volume ratio of 3:4:3, was injected to prepare a coin type half-cell.

The coin type half-cell prepared as described above was charged to 4.25 V in a constant current-constant voltage (CC(0.1 C)-CV(Cut-off current: 0.05 C)) mode at 25°C, rested for 20 minutes, and then immediately discharged to 2.5 V in a CC (0.1 C) mode to perform an initial charge and discharge process. In this case, resistance was measured through a voltage change for 60 seconds during discharge, and the measured resistance is presented in Table 2 below.

**[Table 2]**

| Category | Resistance (Ω) |
|---|---|
| Example 1 | 31.9 |
| Example 2 | 32.5 |
| Example 3 | 33.2 |
| Example 4 | 33.8 |
| Example 5 | 38.9 |
| Comparative Example 1 | 38 |
| Comparative Example 2 | 36.9 |
| Comparative Example 3 | 35.2 |
| Comparative Example 4 | 47.9 |
| Comparative Example 5 | 53.1 |
| Comparative Example 6 | 40.1 |
| Comparative Example 7 | 48.2 |

### Experimental Example 4: Battery Performance Evaluation

Each of the positive electrode materials of Examples 1 to 10 and Comparative Examples 1 to 7, carbon black as a conductive agent, and polyvinylidene fluoride (PVDF), as a binder, were mixed in a weight ratio of 97.5:1:1.5 in an N-methylpyrrolidone (NMP) solvent to prepare a positive electrode slurry. One surface of an aluminum current collector was coated with the above-prepared positive electrode slurry, dried at 130°C, and then rolled to prepare a positive electrode.

Graphite as a negative electrode active material, carbon black as a conductive agent, and PVDF, as a binder, were mixed in a weight ratio of 96:0.5::3.5 in distilled water to prepare a negative electrode slurry (solid content: 50 wt%). A copper thin film, as a negative electrode collector, was coated with the above-prepared negative electrode slurry, dried, and then rolled to prepare a negative electrode.

An electrode assembly was prepared by disposing a porous polyethylene separator between the positive electrode and the negative electrode. The electrode assembly was disposed in a battery case and an electrolyte solution, in which 1.0 M LiPF₆ was dissolved in an organic solvent in which ethylene carbonate(EC):ethyl methyl carbonate(EMC):diethyl carbonate(DEC) were mixed in a volume ratio of 3:4:3, was injected, and the battery case was sealed to prepare a pouch type lithium secondary battery (battery capacity: 40 mAh).

Using the pouch type lithium secondary battery including each of the positive electrode materials of Examples 1 to 10 and Comparative Examples 1 to 7, the pouch type lithium secondary battery was charged to 4.25 V in a CC(0.1 C)-CV(Cutoff current: 0.05 C) mode at 25°C, and then discharged at 0.1 C to 3.0 V to perform a formation process. Subsequently, charging of the pouch type lithium secondary battery to 4.25 V in a CC(0.33 C)-CV(Cut-off current: 0.05 C) mode at 45°C and then discharging of the pouch type lithium secondary battery at 0.33 C to 3.0 V was set as one cycle, discharge capacities and resistances were measured while 100 cycles of the charging and discharging were performed.

In addition, a percentage of the discharge capacity in a 100^{th} cycle to the discharge capacity in a 1^{st} cycle was set as capacity retention (%), a percentage of the resistance measured in the 100^{th} cycle to the resistance measured in the 1^{st} cycle was set as a resistance increase rate (%), and the results thereof are presented in Table 3 below.

**[Table 3]**

| Category | Capacity retention (%) | Resistance increase rate (%) |
|---|---|---|
| Example 1 | 94.56 | 18.94 |
| Example 2 | 94.48 | 20.58 |
| Example 3 | 94.41 | 21.01 |
| Example 4 | 94.52 | 21.32 |
| Example 5 | 94.45 | 22.11 |
| Example 6 | 95.22 | 24.57 |
| Example 7 | 95.39 | 24.61 |
| Example 8 | 95.81 | 24.96 |
| Example 9 | 95.89 | 25.27 |
| Example 10 | 96.28 | 24.31 |
| Comparative Example 1 | 93.85 | 31.82 |
| Comparative Example 2 | 94.02 | 30.46 |
| Comparative Example 3 | 94.24 | 27.52 |
| Comparative Example 4 | 94.15 | 36.79 |
| Comparative Example 5 | 94.89 | 35.63 |
| Comparative Example 6 | 94.42 | 38.48 |
| Comparative Example 7 | 93.82 | 32.87 |

In addition, capacity retentions and resistance increase rates were evaluated in the same manner as described above except that the weight ratio of the positive electrode material:the conductive agent:the binder was changed from 97.5:1:1.5 to 97.72:0.8:1.48 for some of the examples and the comparative examples, and the results thereof are presented in Table 4 below.

**[Table 4]**

| Category | Capacity retention (%) | Resistance increase rate (%) |
|---|---|---|
| Example 1 | 94.66 | 20.07 |
| Example 2 | 94.44 | 21.55 |
| Example 5 | 94.29 | 23.98 |
| Example 9 | 95.53 | 27.11 |
| Comparative Example 6 | 93.78 | 85.70 |

Referring to Tables 2 and 3, with respect to the batteries including the positive electrode material according to the present invention, it may be confirmed that the resistance was not only low at 38.9 Ω or less, but also the capacity retention was high at 94.41% or more and the resistance increase rate was low at 25.27% or less. In contrast, with respect to the batteries including the positive electrode materials of Comparative Examples 1 to 9, there was a problem in that the resistance was high, the capacity retention was reduced, or the resistance increase rate was high.

That is, with respect to the batteries including the positive electrode material according to the present invention, the resistance was low and life performance was excellent, but, with respect to the batteries including the positive electrode materials of the comparative examples, it may be confirmed that problems occurred in resistance performance or life performance.

In addition, referring to Tables 3 and 4, with respect to the batteries including the positive electrode material according to the present invention, it may be confirmed that performance of the battery was not significantly degraded even though the amount of the conductive agent was decreased. In contrast, with respect to the batteries including the positive electrode materials of the comparative examples, if the amount of the conductive agent was decreased, conductivity was reduced, and thus, it may be understood that there was a problem in that the resistance increase rate of the battery was significantly increased.

As a result, since the positive electrode material according to the present invention simultaneously included the small particle-sized first positive electrode active material with an olivine structure having an average particle diameter (D₅₀) of 0.5 µm to 10 µm, including 2 wt% to 3.5 wt% of carbon (C), and having an average crystal size of 100 nm or more and less than 160 nm; and the large particle-sized second positive electrode active material that is a lithium nickel-based oxide, it may be understood that it not only had excellent energy density, but may also improve performance of the electrode and the battery which included the positive electrode material, for example, the resistance performance or life performance.

## Claims

1. A positive electrode material comprising:
a first positive electrode active material with an olivine structure; and a second positive electrode active material that is a layer-structured lithium nickel-based oxide having a larger average particle diameter (D₅₀) than the first positive electrode active material,
wherein the first positive electrode active material has an average particle diameter (D₅₀) of 0.5 µm to 10 µm, comprises 2 wt% to 3.5 wt% of carbon (C), and has an average crystal size of 100 nm or more and less than 160 nm.

2. The positive electrode material of claim 1, wherein the first positive electrode active material comprises a lithium iron phosphate-based compound and a carbon (C)-containing coating layer formed on the lithium iron phosphate-based compound.

3. The positive electrode material of claim 2, wherein the lithium iron phosphate-based compound has a composition represented by Formula 1:
[Formula 1] Li₁₊ₓFe₁₋ₐMₐPO₄
wherein, in Formula 1,
M is at least one selected from Al, Mg, Ni, Co, Mn, Ti, Ga, Cu), V, Nb, Zr, Ce, In, Zn, Na, Si, Ca, B, and Y, and
-0.2≤x≤0.2, and 0≤a≤0.9.

4. The positive electrode material of claim 1, wherein a particle form of the first positive electrode active material is a form of a secondary particle, a form of a single particle, or a combination thereof.

5. The positive electrode material of claim 1, wherein the second positive electrode active material comprises nickel in an amount of 60 mol% or more based on a total number of moles of metals excluding lithium.

6. The positive electrode material of claim 1, wherein the second positive electrode active material has a composition represented by Formula 2:
[Formula 2] Li_{1+y}Ni_{b}Co_{c}M1_{d}M2ₑO₂
wherein, in Formula 2,
M1 is Mn, Al, or a combination thereof,
M2 is at least one selected from W, Mo, Cr, Zr, Ti, Mg, Ta, B and Nb, and
-0.05≤y≤0.3, 0.6≤b<1.0, 0<c<0.4, 0<d<0.4, 0≤e≤0.1, and b+c+d+e=1.

7. The positive electrode material of claim 1, wherein the second positive electrode active material is in a form of a secondary particle.

8. The positive electrode material of claim 1, wherein the second positive electrode active material has an average particle diameter (D₅₀) of 3 µm to 15 µm.

9. The positive electrode material of claim 1, wherein the first positive electrode active material is included in an amount of 35 wt% or more and less than 90 wt% based on a total weight of the first positive electrode active material and the second positive electrode active material.

10. A positive electrode comprising the positive electrode material of any one of claims 1 to 9.

11. A lithium secondary battery comprising the positive electrode of claim 10.
